# EUROPÄISCHE PATENTSCHRIFT

(11) **EP 0 736 354 B1**
(45) Veröffentlichungstag und Bekanntmachung des Hinweises auf die Patenterteilung: **13.01.1999**
(21) Anmeldenummer: 96200859.5
(22) Anmeldetag: 29.03.1996
(51) Int. Cl.: B23K 1/08

(54) **Verfahren zum Wellenlöten von Baugruppen**
Method for wave soldering electronic components
Procédé de soudage à la vague d'éléments électroniques

(30) Priorität: 06.04.1995 DE 19512902
(43) Veröffentlichungstag der Anmeldung: 09.10.1996
(73) Patentinhaber: Philips Patentverwaltung GmbH, 22335 Hamburg (DE); Koninklijke Philips Electronics N.V., 5621 BA Eindhoven (NL)
(72) Erfinder: Fothen, Manfred, c/o Philips Patentverw.GmbH, 22335 Hamburg (DE)
(74) Vertreter: Schmalz, Günther, Dipl.-Ing.

(56) Entgegenhaltungen:
- EP-A- 0 206 231
- EP-A- 0 278 166

## Beschreibung

Die Erfindung bezieht sich auf ein Verfahren zum Wellenlöten von Baugruppen, die mittels einer Transporteinrichtung über eine Lötanlage hinweg geführt werden, wobei Lötzinn in einer turbulenten Zone über eine erste turbulente Lötwelle unter einem spitzen Winkel in Transportrichtung und danach über eine ruhige Lötwelle etwa rechtwinklig gegen die Baugruppen gefördert wird. Die Erfindung bezieht sich ferner auf eine Anordnung zur Durchführung dieses Verfahrens.

Derartige Verfahren zum Wellenlöten von Baugruppen sind bekannt. Die auf Trägern angeordneten Baugruppen werden z.B. mittels eines Transportbandes über die Lötanlage hinweg geführt. Die Lötanlage besitzt quer zur Transportrichtung angeordnete sogenannte Lötwellen, die aus flüssigem Lötzinn bestehen und die die zu lötenden Baugruppen von unten benetzen. Das flüssige Lötzinn wird dabei aus einem Bad mittels einer Pumpe in eine Welle oder Walze gefördert, die mit einem Spalt versehen ist, so daß das Lötzinn in Form eines Filmes austritt und die Gestalt einer Lötwelle annimmt.

Bekannte Anordnungen dieser Art besitzen zumeist eine sogenannte turbulente Lötwelle (Jet-Welle oder Chip-Welle), bei der das flüssige Lötzinn unter einem spitzen Winkel in Transportrichtung der Baugruppen austritt und diese von unten mit dem Lötzinn benetzt. Infolge der hohen Fließgeschwindigkeit des Lötzinns, das unter einem spitzen Winkel gegen die zu lötenden Positionen gespritzt wird, entsteht eine sogenannte Schattenwirkung, d.h. es entstehen Positionen, die nicht mit Lötzinn benetzt werden. Ferner entstehen bei diesem Vorgang Kurzschlußbrücken, die durch die nachgeschaltete ruhige Lötwelle (Lambda-Welle) wieder entfernt werden. Diese sogennante Lambda-Welle ist flach und nimmt das noch nicht erkaltete Lötzinn bei den Kurzschlußbrücken wieder ab. Die Lambda-Welle entfernt zwar die nicht erwünschten Kurzschlußbrücken, die nicht gelöteten Schattenpositionen bleiben jedoch, so daß nicht gelötete bzw. kalte Lötstellen entstehen.

Um derartige Nachteile zu vermeiden, läßt man bisher die Träger mit den im ersten Durchgang gelöteten Baugruppen ein zweites Mal durchlaufen, dabei werden die Träger jedoch um 180° gedreht, so daß nunmehr die beim ersten Vorgang im Schatten gelegenen Positionen durch die im spitzen Winkel auftreffende turbulente Lötwelle benetzt werde. Ein derartiges Verfahren ist, wie leicht einzusehen, sehr zeitaufwendig und umständlich.

Durch die EP-0 621 101 Al ist ein Verfahren und ein Apparat zum Löten von Baugruppen in einer nicht oxydierenden Gasatmosphäre bekannt geworden. Hierbei wird das Lötzinn offensichtlich in einer ruhigen Welle rechtwinklig zu den Baugruppen zugeführt und läuft zu beiden Seiten ab. Ähnliche Anordnungen sind auch durch die US-PS 52 28 614 und US-PS 52 92 055 bekannt geworden, die ebenfalls lediglich eine ruhige Lötwelle zeigen, in welcher das Lötzinn rechtwinklig zu den Baugruppen zugeführt wird.

Der Erfindung liegt die Aufgabe zugrunde ein Verfahren der eingangs genannten Art derart zu verbessern, daß unter Zeiteinsparung eine zuverlässige Lötung aller Positionen gewährleistet ist.

Diese Aufgabe wird bei einem Verfahren der eingangs genannten Art gemäß der Erfindung dadurch gelöst, daß in der turbulenten Zone zusätzlich Lötzinn über eine zweite turbulente Lötwelle unter einem spitzen Winkel entgegen der Transportrichtung gegen die Baugruppen gefördert wird. Damit wird in einem einzigen Arbeitsgang Lötzinn jeweils unter einem spitzen Winkel sowohl in Transportrichtung als auch in Gegentransportrichtung zu den Baugruppen gefördert. Damit ist die Gefahr, daß Schattenpositionen entstehen, in denen keine Benetzung durch Lötzinn erfolgen kann, behoben. Die Benetzung erfolgt in einem einzigen Arbeitsgang, so daß ein erneutes Durchlaufen nicht mehr erforderlich ist. In der nachgeschalteten ruhigen Lötwelle erfolgt, wie bereits bekannt, die Entfernung der nicht gewünschten Kurzschlußbrücken.

In Ausgestaltung der Erfindung ist vorgesehen, daß das Lötzinn innerhalb der turbulenten Zone, in Transportrichtung gesehen, zuerst gegen und danach in Transportrichtung gegen die Baugruppen gefördert wird. Gleich gute Ergebnisse werden erzielt, wenn in umgekehrter Reihenfolge das Lötzinn innerhalb der turbulenten Zone, in Transportrichtung gesehen, zuerst in und danach gegen die Transportrichtung gegen die Baugruppen gefördert wird. Wichtig ist in beiden Fällen, daß beide Lötwellen eine gleiche Höhe in bezug auf die Baugruppen haben, so daß gewährleistet ist, daß die Spitzen der Lötwellen die Baugruppen gleichmäßig treffen.

Die Erfindung bezieht sich ferner auf eine Anordnung zur Durchführung des erfindungsgemäßen Verfahrens mit einer Transporteinrichtung für die zu lötenden Baugruppen, mit einer Vorrichtung zur Erzeugung einer ruhigen Lötwelle und mit einer Vorrichtung zur Erzeugung einer turbulenten Lötwelle, bei welcher das Lötzinn unter einem spitzen Winkel über eine erste Düse in Transportrichtung gegen die Baugruppen gefördert wird. Gemäß der Erfindung ist eine zweite Düse zur Erzeugung einer turbulenten Lötwelle vorgesehen, bei welcher das Lötzinn unter einem spitzen Winkel in Gegenrichtung zur Transportrichtung austritt und gegen die Baugruppen gefördert wird. Diese zusätzliche Düse kann z.B. als besonderes, eigenständiges Bauteil ausgebildet sein. In Ausgestaltung der Erfindung ist jedoch vorgesehen,
daß die beiden Düsen zur Erzeugung der turbulenten Lötwellen als Einheit mit einer gemeinsamen Lötmittelzufuhr und einer gemeinsamen Pumpe zur Förderung des Lötmittels ausgebildet sind und
daß eine sich über die gesamte Breite der Lötbahn erstreckende Zwillingswelle vorgesehen ist, die die zwei Austrittsdüsen für das in und gegen die Transportrichtung geförderte Lötmittel aufweist.

Damit ergibt sich eine kompakte und raumsparende Bauweise zur Erzeugung beider turbulenter Lötwellen in einem einzigen Gerät. Für beide Lötwellen ist dabei nur eine einzige Förderpumpe für das Lötzinn vorgesehen. Bei korrekter Anordnung, Ausbildung und Lage der Austrittsdüsen entstehen zwei aufeinander und auf die zu lötenden Baugruppen abgestimmte gegenläufige Lötwellen. Bei der ersten Lötwelle wird das flüssige Lötzinn aus der ersten Austrittsöffnung unter einem spitzen Winkel in Transportrichtung gegen die Baugruppen gespritzt. Bei der zweiten Lötwelle wird das flüssige Lötzinn durch die zweite Austrittsöffnung unter einem spitzen Winkel in Gegenrichtung gegen die Bauträger gespritzt.

In weiterer Ausgestaltung der Erfindung ist vorgesehen, daß die Zwillingswelle eine Messerleiste aufweist, deren Spitze mit einer ortsfesten Leiste eine erste Düsenöffnung bildet, und daß die Messerleiste mit einer zweiten Öffnung versehen ist, die eine zweite Düsenöffnung für das austretende Lötzinn bildet. Diese Bauweise hat den Vorteil, daß dabei die erfindungsgemäße Messerleiste lediglich ein bei bekannten Bauarten ohnehin verwendetes Bauteil ersetzen kann, das lediglich zur Bildung einer einzigen Austrittsöffnung vorgesehen war. Weitere bauliche Änderungen sind dabei nicht erforderlich.

In weiterer Ausgestaltung der Erfindung ist vorgesehen, daß die beiden, von innen nach außen sich verjüngenden Düsen so aufeinander abgestimmt sind, daß bei Zufuhr des mittels einer Pumpe geförderten Lötzinns die aus den beiden Düsenöffnungen austretenden, gegenläufigen Lötwellen, bezogen auf das Transportband, möglichst auf gleicher Höhe liegen. Damit wird eine gleichmäßige Benetzung der zu lötenden Baugruppen gewährleistet.

In der Zeichnung sind in den Fig. 1 bis 3 Ausführungsbeispiele des Gegenstandes gemäß der Erfindung schematisch dargestellt. Fig. 4 zeigt eine bekannte Bauart.
Fig. 1 zeigt eine schematische Darstellung einer Lötanlage zum Wellenlöten von Baugruppen,
Fig. 2 zeigt eine erfindungsgemäße Doppel-Düsenanordnung zur Erzeugung von zwei gegenläufigen Lötwellen,
Fig. 3 zeigt in drei Ansichten ein Bauteil gemäß Fig. 2, und
Fig. 4 zeigt eine bekannte Düsenanordnung zur Erzeugung einer einzigen Lötwelle.

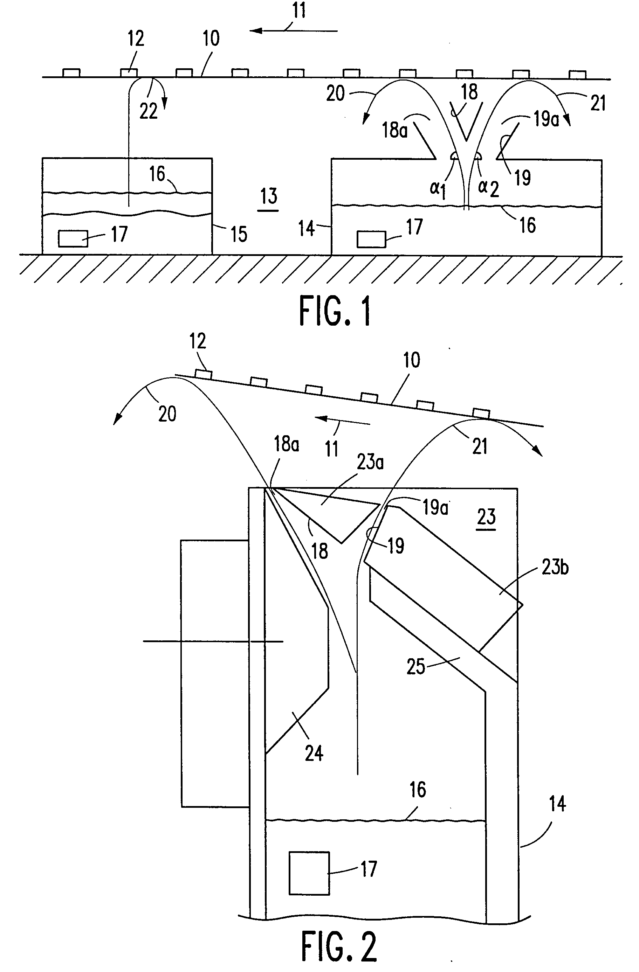

Die Lötanlage gemäß Fig. 1 besitzt ein Transportband 10, auf welchem in Richtung 11 zu lötende Baugruppen 12 transportiert werden. Bei diesem Transport werden die Baugruppen 12 über eine Lötanlage 13 hinweg geführt, die zwei Behälter 14, 15 mit flüssigem Lötmittel 16 enthält. Im ersten Behälter 14 wird das Lötzinn 16 durch eine Pumpe 17 einmal zu einer Austrittsdüse 18 und zum anderen zu einer Austrittsdüse 19 geführt, so daß das austretende Lötzinn 16 an den verengten Austrittsöffnungen 18a, 19a sogenannte Lötwellen 20, 21 bildet, die mit ihren Scheitelpunkten die Unterseiten der zu lötenden Baugruppen 12 benetzen und mit Lötzinn versehen. Die Lötwelle 20 tritt unter einem spitzen Winkel α1 aus und wird in Transportrichtung 11 gegen die Baugruppen 12 gespritzt. Die Lötwelle 21 tritt unter einem spitzen Winkel α2 aus und wird gegen die Transportrichtung 11 gegen die Baugruppen 12 gespritzt. Diese Bauweise bewirkt, daß keine Schattenstellen auf den Unterseiten der zu lötenden Baugruppen entstehen können. Nachdem die Baugruppen diese turbulenten Lötwellen 20, 21 durchlaufen haben, geraten sie in die ruhige Lötwelle 22, durch welche die beim ersten Lötvorgang entstehenden Kurzschlußbrücken entfernt werden. Während die Lötwellen 20, 21 mit hoher Fließgeschwindigkeit austreten, verläuft die Lötwelle 22 ruhig und langsam.

Die konstruktive Ausgestaltung der Austrittsdüsen 18, 19 ist in Fig. 2 schematisch in einer Seitenansicht dargestellt. Die sich verjüngende Düse 19 mit der Austrittsöffnung 19a wird in einer aus zwei Teilen 23a, b bestehenden Messerleiste 23 gebildet. Die andere sich verjüngende Düse 18 mit ihrer Austrittsöffnung 18a wird von einer ortsfesten Leiste 24 und von dem Teil 23a gebildet. Die zweiteilige Messerleiste 23a ist auf einem ortsfesten Träger 25 befestigt.

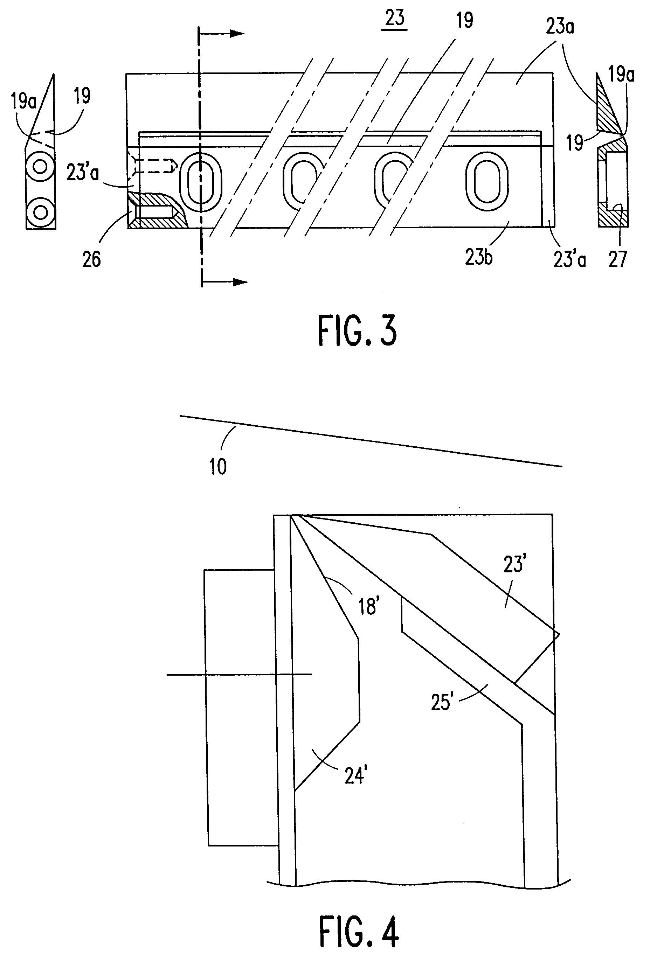

Im Vergleich zeigt Fig. 4 eine nach dem Stand der Technik bekannte Bauart, wobei die Messerleiste 23' als einteiliges Bauteil ausgebildet ist, das mit der ortsfesten Leiste 24' nur eine einzige Düse 18' bildet.

Die Messerleiste 23 gemäß Fig. 2 ist in Fig. 3 in einer Draufsicht, in einer Seitenansicht und in einer geschnittenen Seitenansicht dargestellt. Das nasenförmige Teil 23a ist über zwei Arme 23a' mittels Schrauben 26 an dem Teil 23b befestigt. Durch Langlöcher in den Armen 23a' kann die Größe der Düse 19 und damit die Größe der Austrittsöffnung 19a verändert werden. Gleiches kann auch für die Düse 18 durch relative Verschiebung zwischen den Bauteilen 23 und 24 erfolgen (Fig. 3). Mit 27 sind Bohrungen zur Befestigung der Messerleiste auf dem Träger 25 bezeichnet.

Die Messerlieiste 23 gemäß der Erfindung bietet den Vorteil, daß damit zwei unabhängig voneinander einstellbare Lötwellen erzeugt werden können, die eine optimale Lötung der Bauteile ermöglichen. Ferner kann eine derartige Messerleiste leicht gegen eine handelsübliche Standardleiste ausgetauscht werden.

## Patentansprüche

1. Verfahren zum Wellenlöten von Baugruppen (12), die mittels einer Transporteinrichtung (10) über eine Lötanlage (13) hinweg geführt werden, wobei Lötzinn (16) in einer turbulenten Zone über eine erste turbulente Lötwelle (20) unter einem spitzen Winkel (α1) in Transportrichtung (11) und danach über eine ruhige Lötwelle (22) etwa rechtwinklig gegen die Baugruppen (12) gefördert wird, dadurch gekennzeichnet, daß in der turbulenten Zone zusätzlich Lötzinn (16) über eine zweite turbulente Lötwelle (21) mit einem spitzen Winkel (α2) entgegen der Transportrichtung (11) gegen die Baugruppen (12) gefördert wird.

2. Verfahren nach Anspruch 1, dadurch gekennzeichnet, daß das Lötzinn (16) innerhalb der turbulenten Zone, in Transportrichtung (11) gesehen, zuerst gegen und danach in Transportrichtung (11) gegen die Baugruppen (12) gefördert wird.

3. Verfahren nach Anspruch 1, dadurch gekennzeichnet, daß das Lötzinn (16) innerhalb der turbulenten Zone, in Transportrichtung (11) gesehen, zuerst in und danach gegen die Transportrichtung (11) gefördert wird.

4. Anordnung zur Durchführung eines Verfahrens nach einem der Ansprüche 1 bis 3,
- mit einer Transporteinrichtung (10) für die zu lötenden Baugruppen (12),
- mit einer Vorrichtung (15) zur Erzeugung einer ruhigen Lötwelle (22),
- mit einer Vorrichtung (14) zur Erzeugung einer turbulenten Lötwelle (20), bei welcher das Lötzinn (16) mit einem spitzen Winkel (α1) über eine erste Düse (18) in Transportrichtung (11) gegen die Baugruppen (12) gefördert wird,
gekennzeichent durch eine zweite Düse (19, 19a) zur Erzeugung einer zweiten turbulenten Lötwelle (21), bei welcher das Lötzinn (16) unter einem spitzen Winkel (α2) gegen die Transportrichtung (11) aus der Lötdüse (19) austritt und gegen die Baugruppen (12) gefördert wird.

5. Anordnung nach Anspruch 4, dadurch gekennzeichnet
- daß die beiden Düsen (18, 19) zur Erzeugung der turbulenten Lötwellen (20, 21) als Baueinheit mit einer gemeinsamen Lötmittelzufuhr und einer gemeinsamen Pumpe (17) zur Förderung des Lötzinns (16) ausgebildet sind und
- daß eine sich über die Breite der Lötbahn erstreckende Zwillingswelle (23, 24) vorgesehen ist, die die Austrittsdüsen (18, 19) für das in und gegen die Transportrichtung (11) geförderte Lötzinn (16) aufweist.

6. Anordnung nach Anspruch 5, dadurch gekennzeichnet, daß die Zwillingswelle eine Messerleiste (23) aufweist, deren Spitze (23a) mit einer ortsfesten Leiste (24) die erste Düsenöffnung (18a) bildet, und daß die zweite Düsenöffnung (19a) innerhalb der Messerleiste (23) ausgebildet ist.

7. Anordnung nach Anspruch 6, dadurch gekennzeichnet, daß die Messerleiste (23) in ein nasenförmiges Teil (23a) und ein Basisteil (23b) zweigeteilt ist und daß das nasenförmige erste Teil (23a) über zwei Arme (23a') unter Bildung der zweiten Düsenöffnung (19a) mit dem Basisteil (23b) verbunden ist.

8. Anordnung nach Anspruch 7, dadurch gekennzeichnet, daß die Teile (23a, 23b) über Langlöcher und Schrauben (26) miteinander verbunden sind.

9. Anordnung nach einem der Ansprüche 6 bis 8, dadurch gekennzeichnet, daß die Messerleiste (23) und die ortsfeste Leiste (24) relativ zueinander verstellbar sind.

10. Anordnung nach einem der Ansprüche 4 bis 9, dadurch gekennzeichnet, daß die beiden von innen nach außen sich verjüngenden Düsen (18, 19) so aufeinander abgestimmt sind, daß bei Zufuhr des mittels der Pumpe (17) geförderten Lötzinns (16) die aus den beiden Düsenöffnungen (18a, 19a) austretenden, gegenläufigen Lötwellen (20, 21), bezogen auf das Transportband (10), möglichst auf gleicher Höhe liegen.

## Claims

1. A method of wave-soldering assembled units (12) which are conducted over a soldering unit (13) by means of a transport device (10), solder (16) being propelled in a turbulent zone via a first, turbulent soldering wave (20) at an acute angle (α1) in the transport direction (11) and subsequently via a quiet soldering wave (22) approximately at right angles against the assembled units (12), characterized in that solder (16) is supplied in the turbulent zone also via a second turbulent soldering wave (21) at an acute angle (α2) against the assembled units (12), against the transport direction (11) thereof.

2. A method as claimed in Claim 1, characterized in that the solder (16) is propelled against the assembled units (12) in the turbulent zone, seen in transport direction, first against and then in the transport direction (11).

3. A method as claimed in Claim 1, characterized in that the solder (16) is propelled in the turbulent zone, seen in transport direction (11), first in and then against the transport direction (11).

4. An apparatus for carrying out a method as claimed in any one of the Claims 1 to 3,
- with a transport device (10) for the assembled units (12) to be soldered,
- with a device (15) for generating a quiet soldering wave (22),
- with a device (14) for generating a turbulent soldering wave (20) in which the solder (16) is propelled through a first nozzle (18) in the transport direction (11) at an acute angle (α1) against the assembled units (12),
characterized by a second nozzle (19, 19a) for generating a second turbulent soldering wave (21) in which the solder (16) issues from the solder nozzle (19) at an acute angle (α2) against the transport direction (11) and is propelled against the assembled units (12).

5. An apparatus as claimed in Claim 4, characterized in that
- the two nozzles (18, 19) for generating the turbulent soldering waves (20, 21) are constructed as a unit with a joint solder feed and a joint pump (17) for transporting the solder (16), and
- a divided shaft (23, 24) is provided extending over the full width of the soldering track and comprising the nozzles (18, 19) for propelling the solder (16) in and against the transport direction (11).

6. An apparatus as claimed in Claim 5, characterized in that the divided shaft comprises a knife-edge strip (23) whose tip (23a) together with a fixed strip (24) forms the first nozzle outlet (18a), and the second nozzle outlet (19a) is formed within the knife-edge strip (23).

7. An apparatus as claimed in Claim 6, characterized in that the knife-edge strip (23) is subdivided into a projecting part (23a) and a base part (23b), and in that the projecting first part (23a) is connected to the base part (23b) by means of two arms (23a'), thus forming the second nozzle outlet (19a).

8. An apparatus as claimed in Claim 7, characterized in that the parts (23a, 23b) are connected to one another by means of slotted holes and screws (26).

9. An apparatus as claimed in any one of the Claims 6 to 8, characterized in that the knife-edge strip (23) and the fixed strip (24) are mutually adjustable.

10. An apparatus as claimed in any one of the Claims 4 to 9, characterized in that the two nozzles (18, 19) which narrow from the inside towards the outside are mutually attuned such that, when solder (16) is provided by the pump (17), the mutually opposed soldering waves (20, 21) issuing from the two nozzle outlets (18a, 19a) lie substantially at the same level in relation to the transport belt (10).

## Revendications

1. Procédé de soudage à la vague d'éléments électroniques (12) qui sont guidés à l'aide d'un dispositif de transport (10) par l'intermédiaire d'une installation de soudage (13), de l'étain à souder (16) étant amené dans une zone turbulente par l'intermédiaire d'une première vague de soudage turbulente (20) dans un angle aigu (α1) dans la direction de transport (11) et ensuite par l'intermédiaire d'une vague de soudage calme (22) dans une direction pratiquement perpendiculaire aux éléments électroniques (12), caractérisé en ce que de l'étain à souder (16) supplémentaire est par ailleurs amené dans la zone turbulente par l'intermédiaire d'une deuxième vague de soudage turbulente (21) dans un angle aigu (α2) dans le sens contraire de la direction de transport (11) sur les éléments (12).

2. Procédé selon la revendication 1, caractérisé en ce que l'étain à souder (16) est d'abord amené dans le sens contraire et ensuite dans la direction de transport (11) sur les éléments électroniques (12) au sein de la zone turbulente, vue dans la direction de transport (11).

3. Procédé selon la revendication 1, caractérisé en ce que l'étain à souder (16) est d'abord amené dans la direction de transport (11) et ensuite dans le sens contraire dans la zone turbulente, vue dans la direction de transport (11).

4. Dispositif de mise en oeuvre d'un procédé selon l'une des revendications 1 à 3,
avec un dispositif de transport (10) pour les éléments électroniques à souder (12),
avec un dispositif (15) en vue de la production d'une vague à souder calme (22),
avec un dispositif (14) en vue de la production d'une vague à souder turbulente (20),
l'étain à souder (16) étant amené dans un angle aigu (α1) par l'intermédiaire d'une première tuyère (18) dans la direction de transport (11) sur les éléments électroniques (12),
caractérisé par une deuxième tuyère (19, 19a) en vue de la production d'une deuxième vague de soudage turbulente (21), l'étain à souder (16) sortant dans un angle aigu (α2) par rapport à la direction de transport (11) de la tuyère de soudage (19) et étant amené contre les éléments électroniques (12).

5. Dispositif selon la revendication 4, caractérisé en ce
que les deux tuyères (18, 19) en vue de la production de vagues de soudage turbulentes (20, 21) sont conçues comme une unité avec une arrivée d'agent de soudage commune et une pompe commune (17) en vue de l'apport de l'étain à souder (16) et
qu'une vague jumelée (23, 24) s'étendant sur la largeur du parcours de soudage est prévue et présente les tuyères de sortie (18, 19) pour l'étain à souder (16) amené dans la direction de transport (11) et dans le sens contraire.

6. Dispositif selon la revendication 5, caractérisé en ce que la vague jumelée présente une réglette de contact (23) dont la pointe (23a) forme avec une réglette stationnaire (24) la première ouverture de tuyère (18a) et que la deuxième ouverture de tuyère (19a) est conçue au sein de la réglette de contact (23).

7. Dispositif selon la revendication 6, caractérisé en ce que la réglette de contact (23) est conçue en deux parties, une partie en forme de nez (23a) et une partie de base (23b) et que la première partie (23a) en forme de nez est reliée par l'intermédiaire de deux bras (23a) en formant la deuxième ouverture de tuyère (19a) avec la pièce de base (23b).

8. Dispositif selon la revendication 7, caractérisé en ce que les pièces (23a, 23b) sont reliées entre elles par l'intermédiaire d'orifices longitudinaux et de vis (26).

9. Dispositif selon une des revendications 6 à 8, caractérisé en ce que la réglette de contact (23) et la réglette stationnaire (24) sont réglables l'une par rapport à l'autre.

10. Dispositif selon l'une des revendications 4 à 9, caractérisé en ce que les deux tuyères (18, 19) se rétrécissant de l'intérieur vers l'extérieur sont adaptées l'une à l'autre de telle sorte qu'en cas d'apport de l'étain à souder amené par l'intermédiaire de la pompe (17), les vagues à souder opposées sortant des deux ouvertures de tuyère (18a, 19a) se trouvent autant que possible à la même hauteur par rapport à la bande de transport (10).
